# EUROPEAN PATENT SPECIFICATION

(11) **EP 4 234 474 B1**
(45) Date of publication and mention of the grant of the patent: **07.10.2026**
(21) Application number: 23165159.7
(22) Date of filing: 16.11.2017
(51) Int. Cl.: B66B 5/22, B66B 19/00, B66B 5/18, B66B 11/00, B66D 5/14

(54) **RETROFITTING AN ELEVATOR MACHINE WITH PRIMARY AND SECONDARY BRAKING**
NACHRÜSTEN EINER AUFZUGSMASCHINE MIT PRIMÄR- UND SEKUNDÄRBREMSUNG
POST-ÉQUIPEMENT D'UNE MACHINE D'ASCENSEUR AVEC UN FREINAGE PRIMAIRE ET SECONDAIRE

(30) Priority: 18.11.2016 US 201615355834
(43) Date of publication of application: 30.08.2023
(62) Document number(s) of the earlier application(s) in accordance with Art. 76 EPC: 17202159.4 / 3 326 953
(73) Proprietor: Otis Elevator Company, Farmington, Connecticut 06032 (US)
(72) Inventor: Davis, Daniel B., Bloomfield, CT, 06002 (US); Williams, Robert K., Bloomfield, CT, 06002 (US); Eschenbrenner, John, Bloomfield, CT, 06002 (US); O'Seep, Gregory M., Bloomfield, CT, 06002 (US); Hubbard, James L., Farmington, CT, 06032 (US); Hardesty, Martin J., Farmington, CT, 06032 (US); Swaybill, Bruce P., Farmington, CT, 06032 (US); Richter, Jesse R., Bloomfield, CT, 06002 (US); Mendrala, Gary P., Bloomfield, CT, 06002 (US); Derwinski, Patricia, Farmington, CT, 06032 (US); Koenig, Christopher H., Bloomfield, CT, 06002 (US)
(74) Representative: Schmitt-Nilson Schraud Waibel Wohlfrom Patentanwälte Partnerschaft mbB

(56) References cited:
- EP-A1- 1 982 950
- DE-A1- 3 201 107
- DE-U1- 29 823 371
- FR-A- 1 189 381
- GB-A- 2 049 847
- JP-U- S59 169 443
- US-A1- 2011 147 129

## Description

Exemplary embodiments pertain to the art of retrofitting elevator machines with braking functionality.

Elevator systems are useful for carrying passengers between various levels in a building. There are various types of elevator systems. Some are referred to as traction-based systems because of reliance upon traction between a drive sheave and hoisting ropes to move and position the elevator car. Elevator machines in traction-based systems include a motor and a brake. There are a variety of known brake configurations.

Supplemental brakes for conventional elevator machines are known. Some elevator codes require braking functions that are not provided by older machines. Supplemental brakes can be added to meet such code requirements. One type of supplemental brake is referred to as a rope grabber because it provides a mechanism for clamping onto the roping arrangement. A rope grabber prevents the roping arrangement from moving, which maintains a position of an elevator car within a hoistway.

Rope grabber braking has drawbacks. One drawback is that the rope grabber system needs to be positioned below the elevator machine drive sheave. This requires taking up space within the hoistway or raising the elevator machine within a machine room for providing adequate spacing for the rope grabber system. Raising elevator machines is very costly, requires adequate clearance in the machine room, and may require new ropes. Such installation is cramped, resulting in limited accessibility for future service. Additionally, some elevator applications exceed the capability of existing rope grabbing devices, or have other space limitations. Rope grabbers, by applying braking forces directly onto the ropes, increase rope wear.

Other options to meet new braking requirements include replacing the existing elevator machine with a completely new machine, which includes the necessary braking capabilities. Such action, however, can be costly and time consuming, and results in wasting otherwise serviceable elevator machinery.

There is a need to enhance braking of installed elevators while eliminating the requirements of: (1) directly applying braking forces to elevator ropes; (2) mounting an additional braking device in the hoistway; (3) raising the elevator machine to accommodate proper braking; and (3) completely replacing elevator machinery, which results in unnecessary waste. On the other hand, there is a need for elevator machinery to include both a primary braking system and a secondary emergency braking system, per safety code requirements.

US 2011/147129 discloses a method of retrofitting a brake onto an elevator machine that was previously installed in an elevator system including selecting a surface of the elevator machine that rotates as a sheave of the machine rotates. A braking surface is provided on the selected surface. At least one brake member is installed in a position to selectively engage the braking surface.

The present invention provides a method of retrofitting a brake onto an elevator machine as claimed in claim 1 and an elevator machine retrofitted with primary and secondary braking as claimed in claim 8

Disclosed is a method of retrofitting an elevator machine with primary and secondary braking, the machine being disposed on a machine support frame in an elevator machine room, and engaging one or more ropes for providing selective movement of an elevator car disposed in an elevator shaft, the machine having a drive sheave including a cylindrical brake drum, and brake components including dual brake arms; the method including: removing the brake components; affixing flanged disc segments about the drum and interlocking the flanged disc segments to form a brake rotor; and mounting respective brake calipers to frame mounts for providing primary and secondary braking to the elevator machine.

Particular embodiments may include any of the following optional features, alone or or in combination with each other, unless specified otherwise:
Each flanged disc segment may include a flange which forms a brake disk of the brake rotor, and a band positioned against the brake drum for connecting the flange to the brake drum.

The flange may extend in radial direction and the band may extends in axial direction.

Each flanged disc segment may include disc guide holes, the drum may include matching brake drum guide holes, and affixing the flanged disc segments to the drum may include positioning guide members therethrough, for orienting each flanged disc segment against the drum. Particularly, the guide members may be bolts or dowels.

The disc guide holes may be band guide holes formed in the band of the flanged disc segment.

Each flanged disc segment may be formed from any of:
(i) a rolled angle;
(ii) affixing together an annular band segment and an annular flange segment and providing therebetween a keyed connection;
(iii) a two piece structure including a band and a flange welded together prior to being installed against the drum, and
(iv) a unitary structure including a band and a flange that a cast formed with a radial corner joint.

The annular band segments and annular flange segments may be welded and/or bolted together.

Affixing each flanged disc segment to the drum may include connecting, to circumferentially adjacent ends of each flange, fastening members, and thereafter fastening together the fastening members.

The fastening members may be circumferentially adjacent tubes, secured together via a bolt, at least one washer and a nut.

Affixing each flanged disc to the drum may include wrapping a continuous rod around an outer diameter of the drum, clamping together the rod ends, and providing hoop compression with a parallel rod clamp.

The rod ends may be threaded and the clamp may include tubes and tightening nuts.

Mounting calipers may include mounting caliper mounting arms to the respective frame mounts, and mounting the calipers to the respective mounting arms.

The mounting arms each may include a same number of calipers, circumferentially spaced about each arm by a mutually constant angle.

The machine may include a brake magnet housing with a spring guide rod, supported by via a brake magnet mount, and mounting calipers may include mounting an end of the mounting arms to respective opposing ends of the brake magnet housing or spring guide rod.

Further disclosed is an elevator machine, retrofitted with primary and secondary braking, the machine being disposed on a machine support frame in an elevator machine room, and engaging one or more ropes for providing selective movement of an elevator car disposed in an elevator shaft, the machine having a drive sheave including a cylindrical brake drum, and brake components including dual brake arms; the machine comprising: flanged disc segments, affixed about the drum and interlocked to form a brake rotor; and mounted, to frame mounts, respective brake calipers, for providing primary and secondary braking to the elevator machine.

Particular embodiments may include any of the following optional features, alone or or in combination with each other, unless specified otherwise:
Each flanged disc segment may include a flange which forms a brake disk of the brake rotor, and a band positioned against the brake drum for connecting the flange to the brake drum. Particularly, the flange may extend in radial direction and the band may extend in axial direction.

Each flanged disc segment may include disc guide holes, the drum may include matching drum guide holes, and guide members may be positioned therethrough, for orienting each flanged disc segment against the drum.

The disc guide holes may be band guide holes formed in the band of the flanged disc segment.

Each flanged disc segment may be formed from any of:
(i) a rolled angle;
(ii) affixing together an annular band segment and an annular flange segment and providing therebetween a keyed connection;
(iii) a two piece structure including a band (54) and a flange (56) welded together prior to being installed against the drum (46), and
(iv) a unitary structure including a band (54) and a flange (56) that a cast formed with a radial corner joint (50A).

The annular band segments and annular flange segments may be welded and/or bolted together.

Each flanged disc segment may be affixed to the drum by connecting, to circumferentially adjacent ends of each flange, fastening members, and thereafter fastening together the fastening members.

Each flanged disc may be affixed to the drum by wrapping a continuous rod around an outer diameter of the drum, clamping the rod ends, and providing hoop compression with a parallel rod clamp.

Each flanged disc segment may include disc guide holes, the drum may include matching drum guide holes, and guide members may be positioned therethrough, for orienting each flanged disc segment against the drum.

Further embodiments may include caliper mounting arms, mounted to the respective frame mounts, and the calipers may be mounted to the respective mounting arms.

The elevator machine may include a brake magnet housing, with a spring guide rod, supported by a brake magnet mount, and an end of the mounting arms may be mounted to respective opposing ends of the brake magnet housing or spring guide rod.

The following descriptions should not be considered limiting in any way. With reference to the accompanying drawings, like elements are numbered alike:
FIG. 1 illustrates an exemplary elevator system;
FIGS. 2A-2D illustrate a method of retrofitting an elevator machine with primary and secondary braking capabilities, according to a disclosed embodiment;
FIG. 3A-3C illustrate a retrofitted elevator machine according to a disclosed embodiment;
FIG. 4A-4C illustrate a rotor component of a retrofitted elevator machine according to a disclosed embodiment;
FIGS. 5A-5B illustrate a rotor component of a retrofitted elevator machine according to another disclosed embodiment;
FIG. 6A-6B illustrate a component for connecting a rotor to a drum according to a disclosed embodiment;
FIG. 7A-7C illustrate a component for connecting a rotor to a drum according to another disclosed embodiment;
FIGS. 8A-8D illustrate an embodiment for mounting calipers to a frame;
FIGS. 9A-9F illustrate another embodiment for mounting calipers to a frame;
FIGS. 10A-10C illustrate another embodiment for mounting calipers to a frame;
FIGS. 11A-11B illustrate an embodiment for attaching the disk to the drum of the elevator machine;
FIGS. 12A-12D illustrate another embodiment for attaching the disk to the drum of the elevator machine; and
FIGS. 13A-13D illustrate another embodiment for attaching the disk to the drum of the elevator machine.

A detailed description of one or more embodiments of the disclosed apparatus and method are presented herein by way of exemplification and not limitation with reference to the Figures.

The disclosed embodiments involve the removal, from the existing elevator machine, the singular machine brake. Thereafter, the application of a new split disc, or split ring (collectively referred to as the "split disc"), is provided to the outside face surface of the existing machine drive sheave, i.e., on the existing brake drum surface. Brake calipers are then mounted onto the existing machine bedplate structure or to caliper mounting arms. Brake pads are positioned to straddle the split disc.

The new split disc and brake calipers are sized to meet regulatory primary machine braking requirements. The same are sized, moreover, to meet regulatory secondary emergency braking requirements.

The primary benefits of the disclosed embodiments, for retrofitting an elevator machine with primary and secondary braking components, include: (1) the ability to perform a complete installation of the braking system in the machine room; (2) avoiding the need to raise, or re-rope the machine; (3) avoiding the direct application of braking / clamping forces to the ropes in order to achieve desired braking; (4) accessibility to the system for service remains the same as that for the machine; (5) avoiding the need to replace the entire elevator machine to provide the disclosed braking features; and (6) associated cost savings.

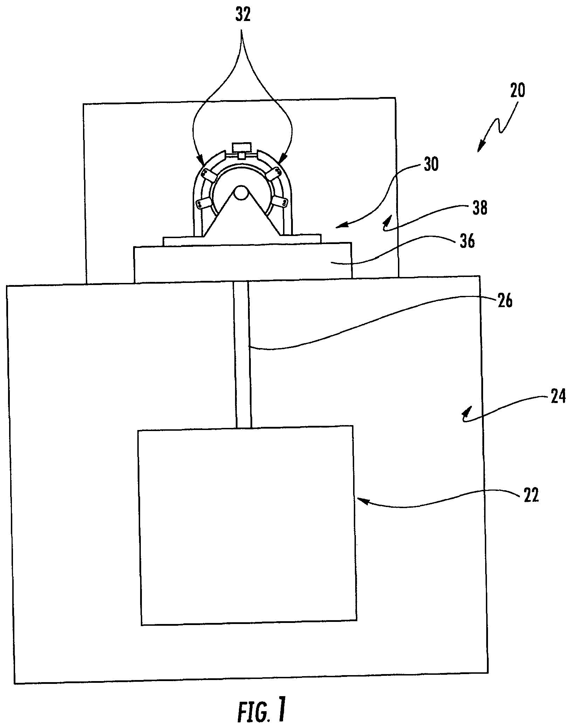

FIG. 1 schematically shows selected portions of an exemplary elevator system 20. An elevator car 22 is situated for movement within a shaft or hoistway 24. The elevator car 22 is supported by a roping arrangement 26.

An elevator machine 30 causes desired movement of the elevator car 22 to provide desired elevator service. The elevator machine 30, which could be a traction elevator machine, includes two brake arms 32 and related braking machinery (not shown). In the example of FIG. 1, the machine 30 is supported on a machine frame 36 within a machine room 38.

An example procedure for retrofitting the machine with a braking arrangement according to disclosed embodiments is described below.

As illustrated in FIGS. 1, 2A-2D and 3, a method is disclosed of retrofitting an elevator machine 30 with primary and secondary braking. The machine 30 has a drive sheave 44. The sheave 44 includes a cylindrical brake drum 46. The machine 30 also has brake components, including dual brake arms 32.

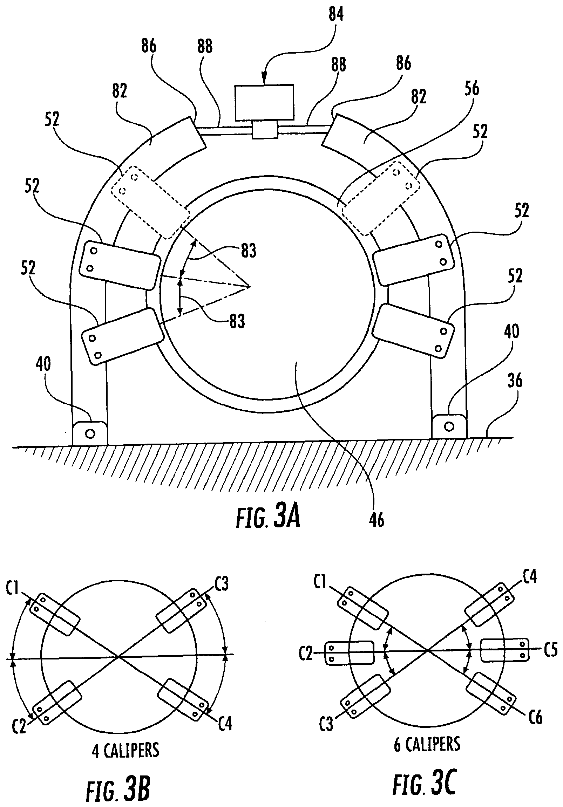

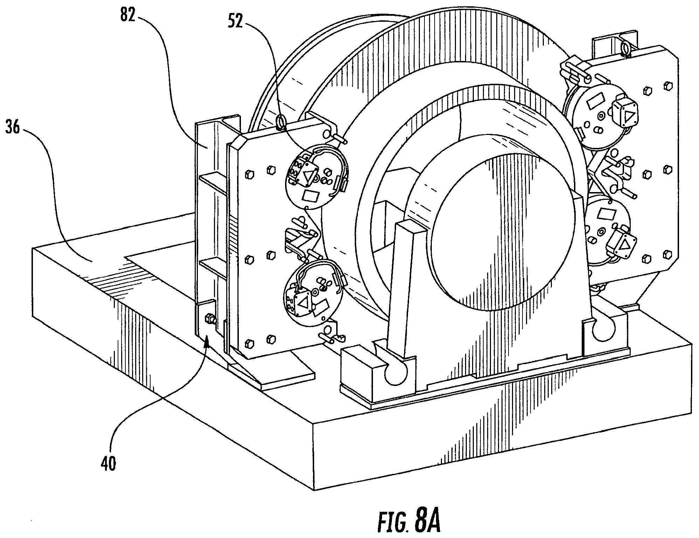

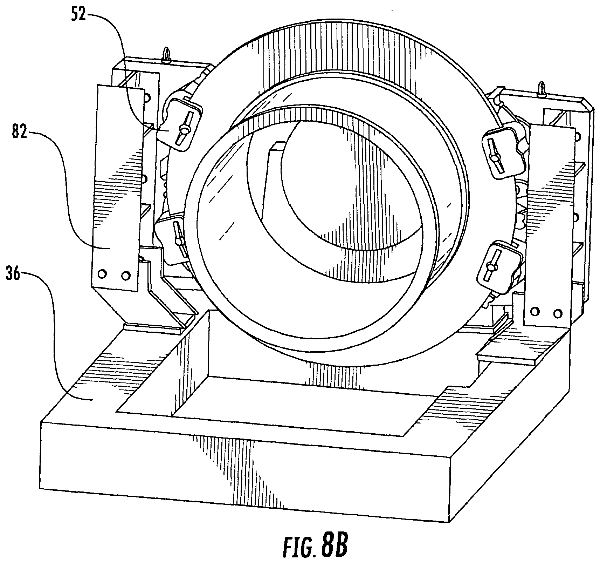

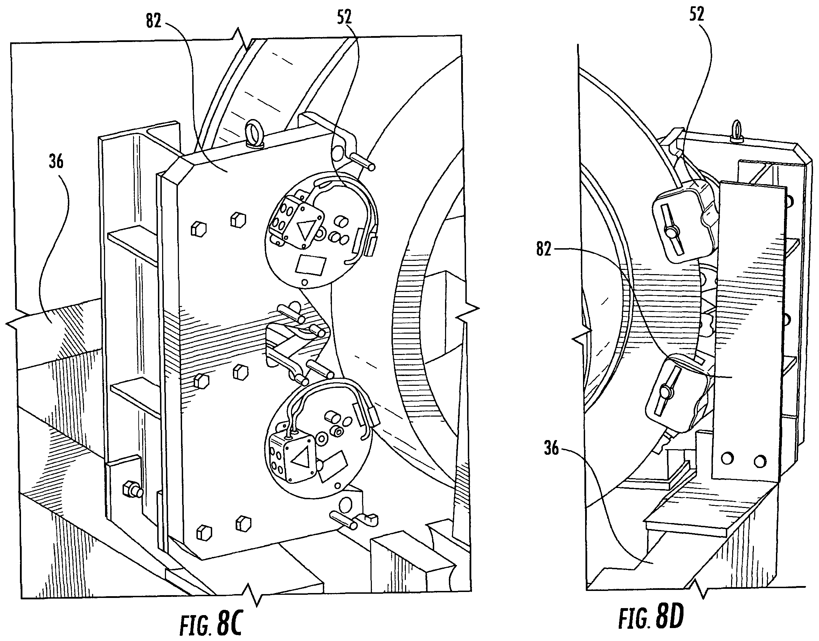

The machine 30 is installed on a machine support frame 36 in an elevator machine room 38. The frame 36 has a pair of frame connection mounts 40, illustrated schematically in FIG. 3A and illustrated structurally in FIG 8A, disposed on opposing circumferential sides of the drum 46. The mounts 40 are designed to transfer brake loads to the frame 36. The machine 30 engages one or more ropes 26 for providing selective movement of an elevator car 22 disposed in an elevator shaft 24.

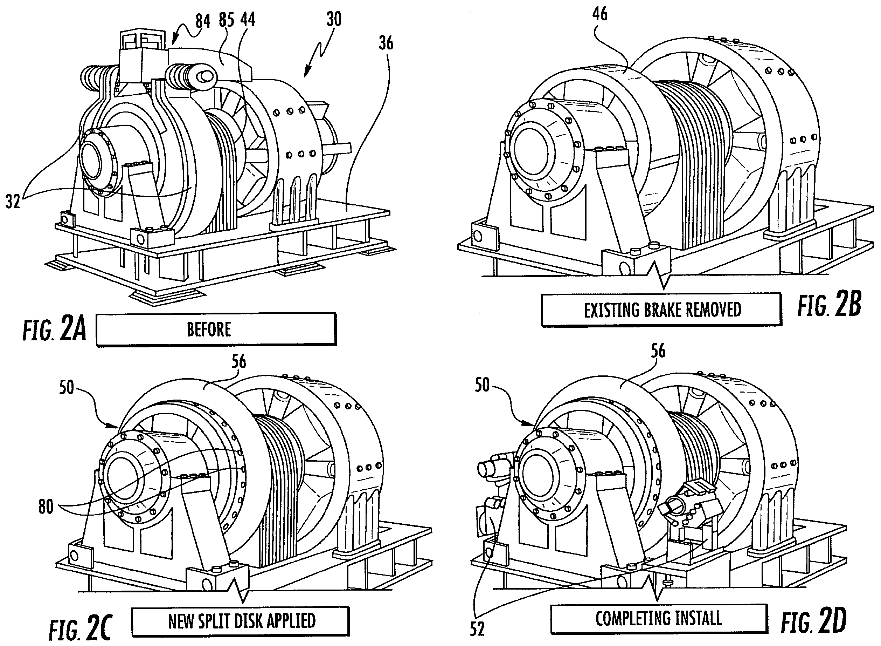

As illustrated in FIGS. 2C, 2D and 3, the method includes removing the brake components and affixing flanged disc segments 50 about the drum 46. In addition, the method includes interlocking the flanged disc segments 50 to form a brake rotor.

The method further includes mounting, to the frame connection mounts 40, respective brake calipers 52 (FIG. 2D). The calipers 52, mounted to both frame mounts 40, are capable of providing primary and secondary braking to the elevator machine 30.

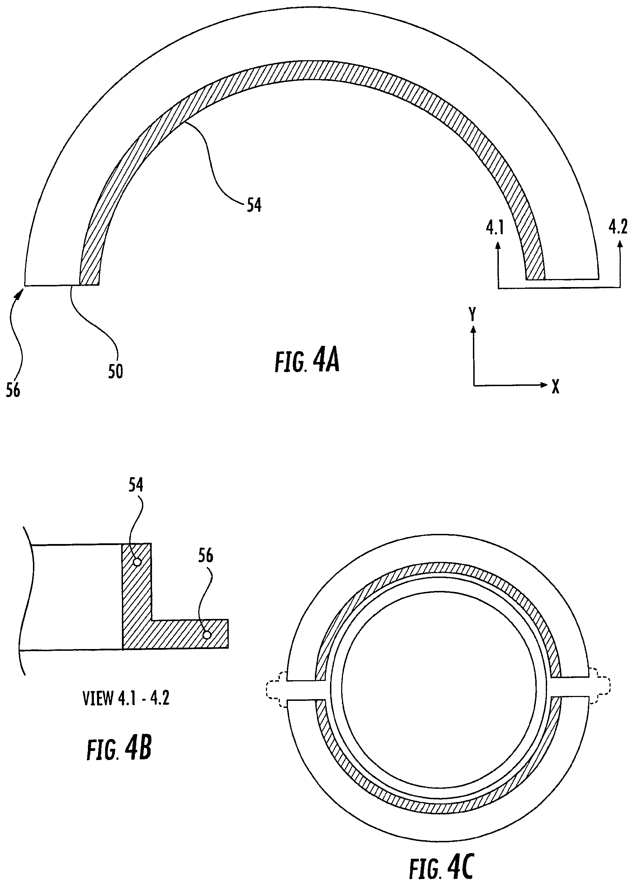

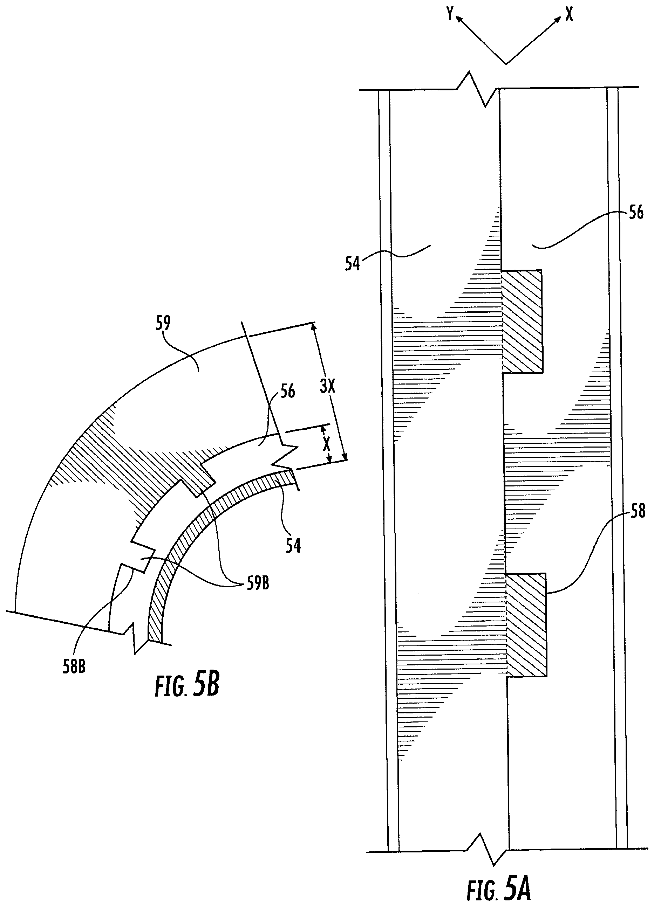

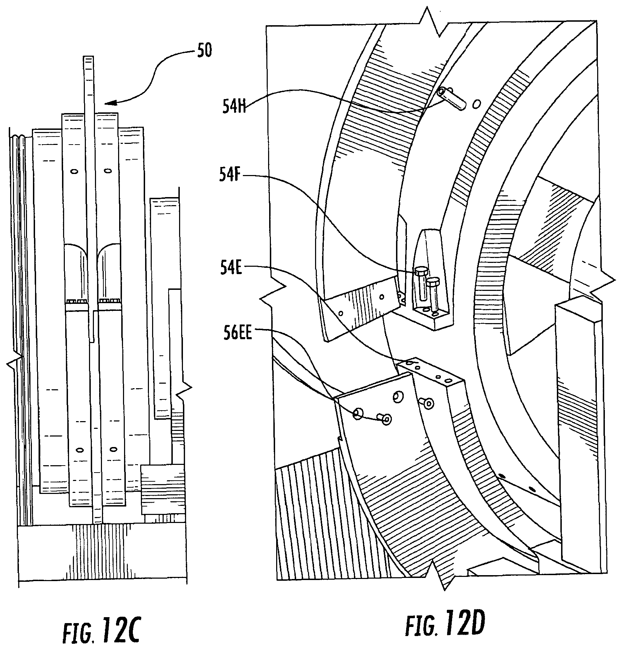

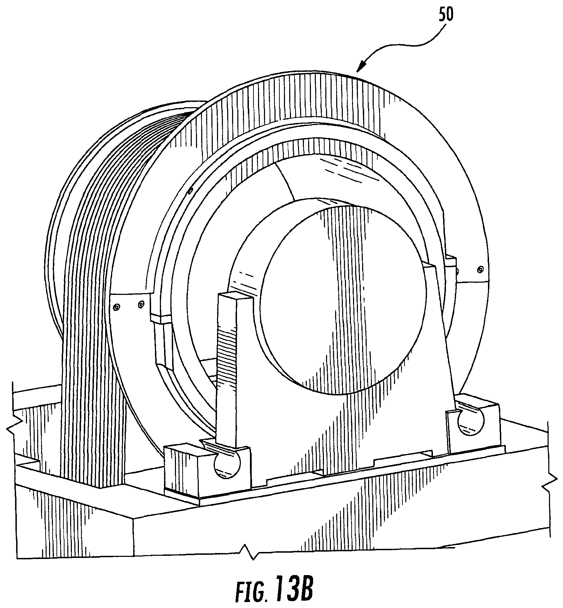

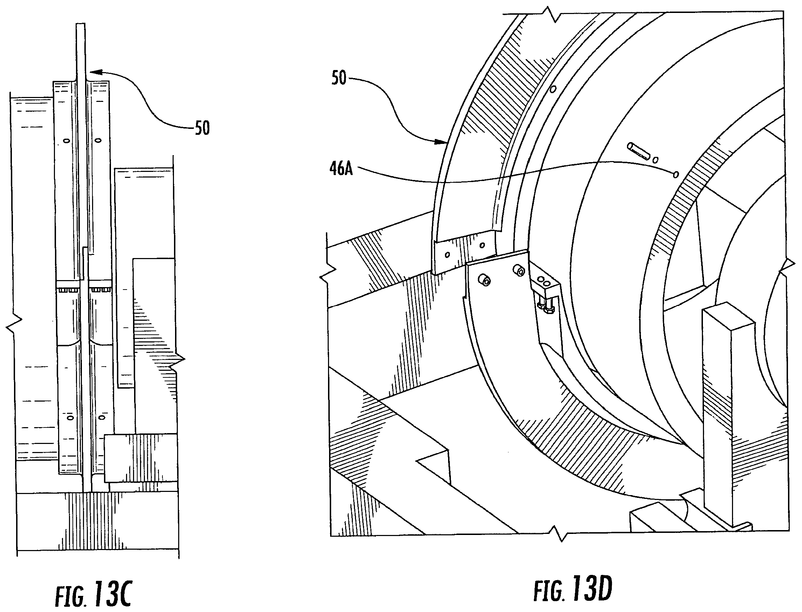

As illustrated in FIGS. 4A-4C, and 5B, in one embodiment, each flanged disc segment 50 is formed from a rolled angle. One part of the rolled angle forms a band 54 of the flanged disc segment 50, which is positioned against the drum 46. The other part of the rolled angle is a flange 56, which forms the disc rotor. The rolled angle may be equal legged, or the flange 56 may be longer to provide a greater braking surface. In addition, the flange 56 may form a mounting surface for an additional, extension flange 59 (FIG. 5B), to form a larger rotor braking surface. For example, in FIG. 5B, the flange 56 has keyed portions 58B for receiving an additional toothed extension flange 59, extending radially outward from the flange 56. The extension flange 59 may be multiple times, e.g., three times, the radial length of the lower flange 56, so as to provide a suitable braking surface. The keyed portion 58B and toothed extensions 59B are connected via half-lap joints, formed with laps in the radial direction, with half-lap joints illustrated more clearly in FIGS. 12D and 13D, with embodiments (disclosed below) that form the laps in the circumferential direction, and the laps are structurally reinforced via bolting, welding or the like.

As illustrated in FIG. 5A, in one embodiment, each flanged disc segment 50 is formed by affixing together an annular band 54 and an annular flange 56. The annular band 54 is positioned against the drum 46 and the flange 56 forms the disc rotor. Provided therebetween is another half-lap, keyed connection 58, where the toothed sections are in the band 54 and the keyed sections are in the flange 56.

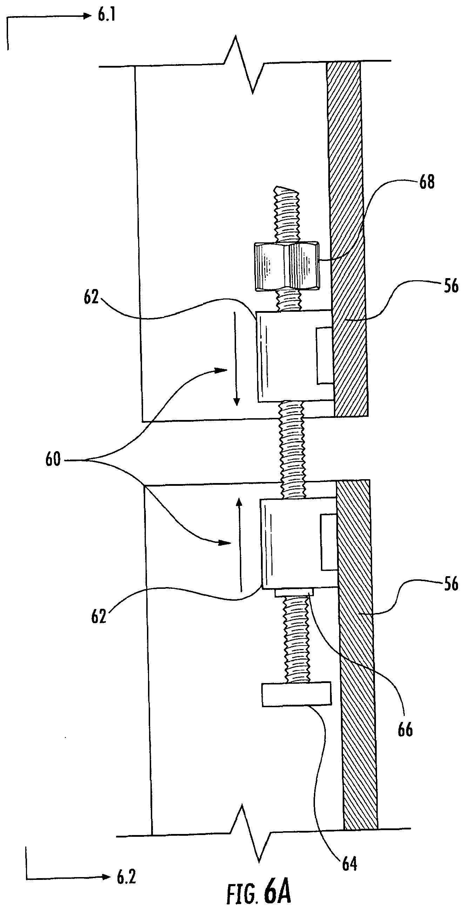

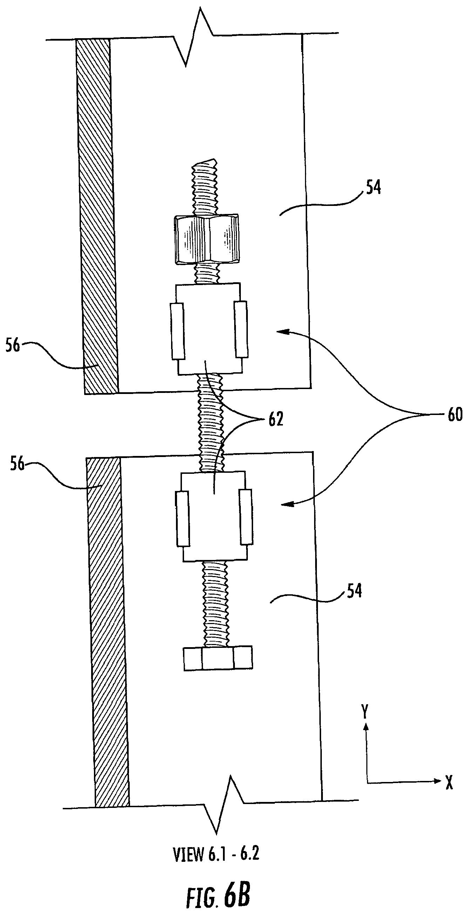

As illustrated in FIGS. 6A-6B, in one embodiment, the step of affixing each flanged disc segment 50 to the drum 46 includes connecting, to circumferentially adjacent ends of each flange 56 (FIG. 6A) or each band 54 (FIG. 6B), fastening members 60, which are then fastened together. In one embodiment, the fastening members 60 are tubes 62, secured via a bolt 64, at least one washer 66 and a nut 68. The effect of this embodiment is to bias the flanged disc segments 50 against the drum 46.

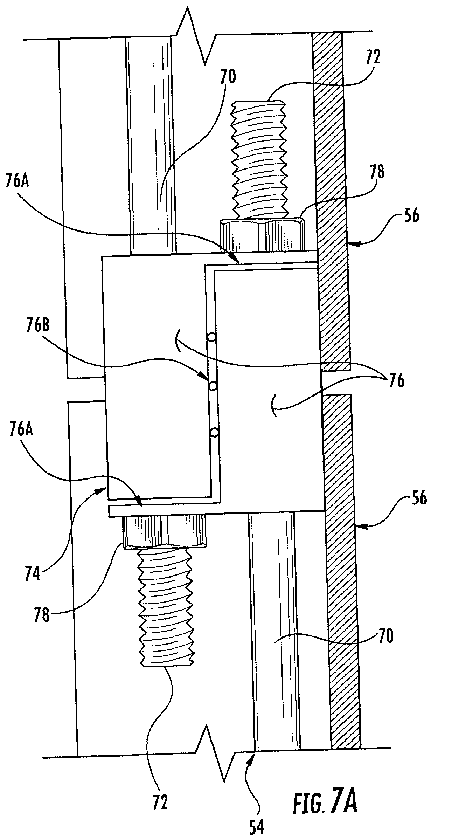

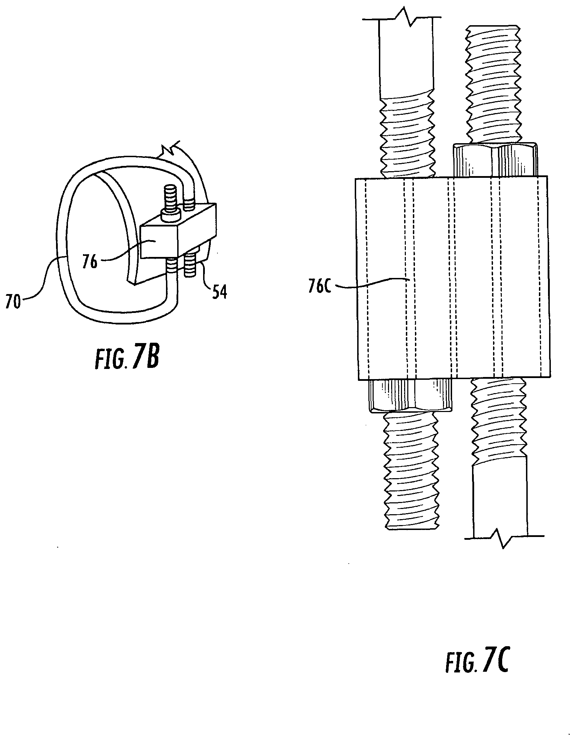

As illustrated FIGS. 7A-7C, in another embodiment, the biasing effect occurs, e.g., via a hose clamp configuration (FIG. 7B). This is implanted by wrapping a continuous rod 70 around an outer diameter of the drum 46, clamping the rod ends 72, and providing hoop compression, via a parallel rod clamp 74. In one embodiment, the rod ends 72 are threaded and the clamp includes tubes 76 and tightening nuts 78. In one embodiment, as illustrated in FIG. 7A, the connector tubes 76 are separate structures, bolted to the rod 70 at tube ends 76A, and bearings 76B can be utilized to assist in the compression of the rod 70. Alternatively, as illustrated in FIG. 7C, the connector 76C can be a single, integrated, double tubed structure.

Turing back to FIG. 2C, in one embodiment, each flanged disc segment 50 includes band guide holes 80, and the drum 46 includes matching drum guide holes (not shown), for orienting each flanged disc segment 50 against the drum 46. In this embodiment, the step of affixing the flanged disc segments 50 to the drum 46 includes positioning guide members, which could be bolts, dowels or the like, through the band 54 and drum guide holes.

Turning back to FIGS. 3A-3C, in one embodiment, the step of mounting calipers 52 includes mounting arcuate mounting arms 82, illustrated schematically, to the respective frame mounts 40. In this embodiment, the mounting step includes mounting the calipers 52 to the respective mounting arms 82. In addition, the mounting arms 82 each include a same number of calipers 52. The calipers 52 are separated on each mounting arm 82 by an angle 83 about the disc circumference to provide an even brake force distribution. To achieve proper angling, the arms 82 may be arcuate.

As illustrated, on each vertical half of the rotor 46, e.g., left and right halves, circumferentially adjacent calipers may be separated by a substantially constant angle. Also as illustrated, pairs of calipers on opposing vertical halves of the rotor 46 may be disposed on a common axis. This is illustrated with e.g., calipers C1 and C4 in the four caliper configuration (FIG. 3B) and C1 and C6 in the six caliper configuration (FIG. 3C). Further, in the six calipers configuration, a center or middle caliper C2, C5 on each vertical half of the rotor 46 may be disposed on the rotor 46 center horizontal axis. With two calipers on each side (FIG. 3B), the rotor 46 center horizontal axis bisects the angle between circumferentially adjacent calipers, e.g., C1, C2. Additional configurations are within the scope of the disclosure.

As illustrated in FIGS. 3A-3C, the machine includes a legacy brake magnet housing 84, with a horizontally extending spring guide rod 88. The housing 84 is supported by the machine structure via a brake magnet mount 85 (FIG. 2A), which essentially is a cast iron box. In one embodiment, the step of mounting calipers 52 includes mounting an end 86 of the mounting arms 82 to opposing sides of the magnet housing 84 or spring guide rod 88.

In addition to the above method for retrofitting a machine, an elevator machine 30 retrofitted by the above method is considered part of the disclosure. Turning to FIGS. 8A-8D, an embodiment is illustrated for mounting calipers 52 to the frame 36, with a pair of caliper mounting arms 82, i.e., each including a pair of calipers 52. The absence, or removal, of brake magnet housing 84, illustrated in the above disclosed embodiments, leaves the mounting arms 82 without a central support. Thus the mounting arms 82 are built stiffly enough to carry the loads using, e.g., I-beam supports. With this embodiment, the mounting arms 82 must be removed in order to change brake pads.

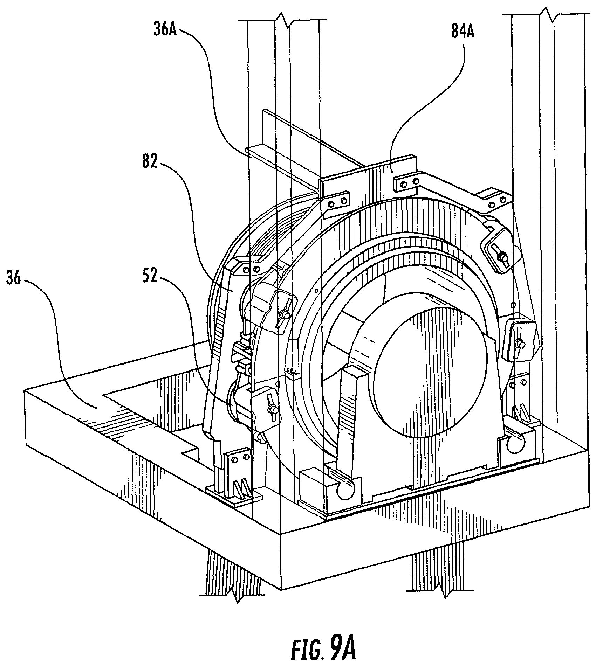

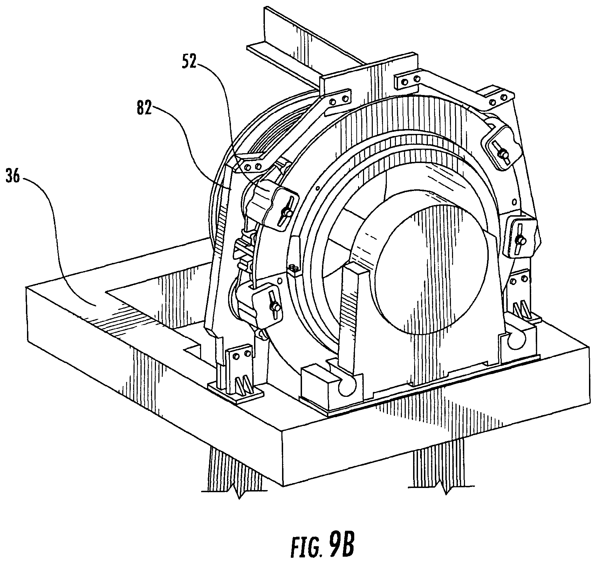

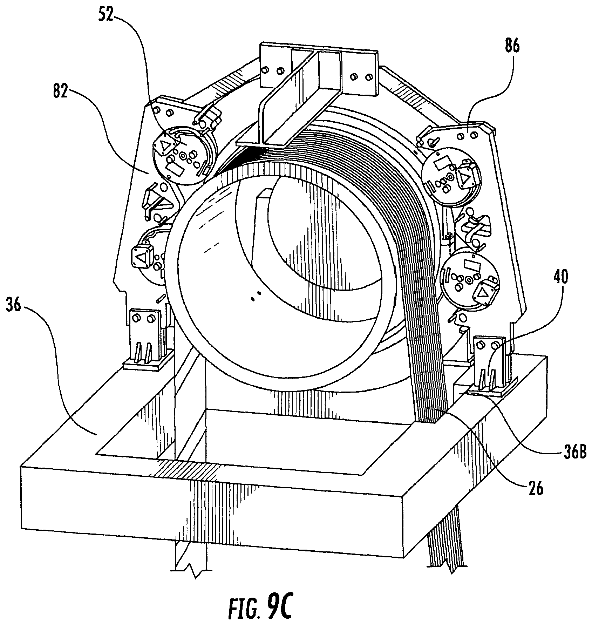

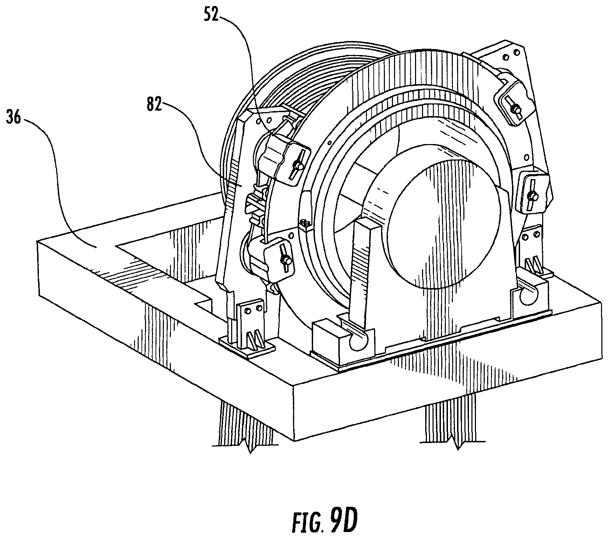

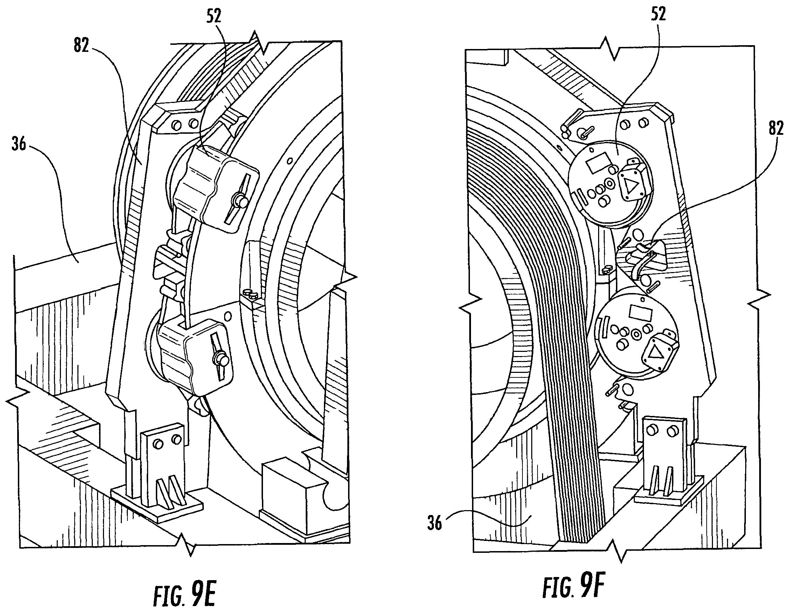

Turning to FIGS. 9A-9F, another embodiment is illustrated for mounting calipers 52 to a frame 36, with a pair of caliper mounting arms 82, i.e., each including a pair of calipers 52. In this embodiment, with the absence, or removal, of the brake magnet housing 84, an additional frame mounted central support 84A is provided connected to ends 86 (FIG. 9C) of the mounting arms 82. The mounting arms 82, may therefore be slender compared with the arms 82 in the embodiment illustrated in FIGS. 8A-8D. This configuration is preferred, e.g., where space is limited. For example, where the frame 36 has additional vertical supports 36A (FIG. 9A), the forward space for mounting stiffer mounting arms 82 may be unavailable. Here too, the mounting arms 82 must be removed in order to change brake pads. As illustrated in FIG. 9C, the frame mount 40 extends slightly past envelope of the elevator machine 30, e.g., spaced from a frame notch 36B, in order to not interfere with rope drop in ropes 26.

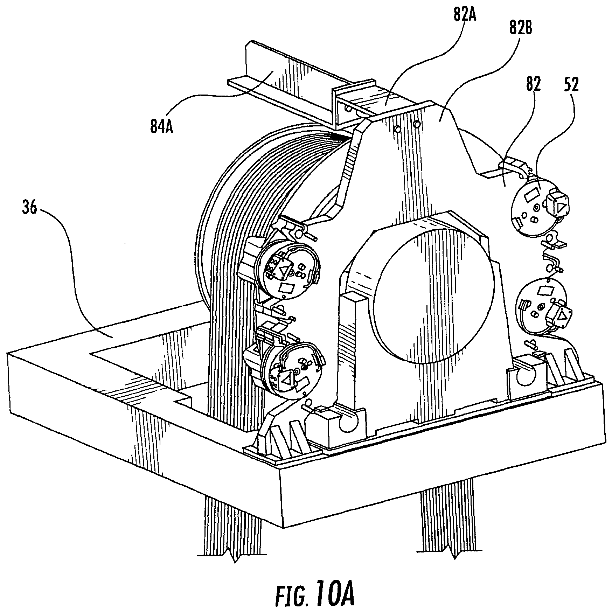

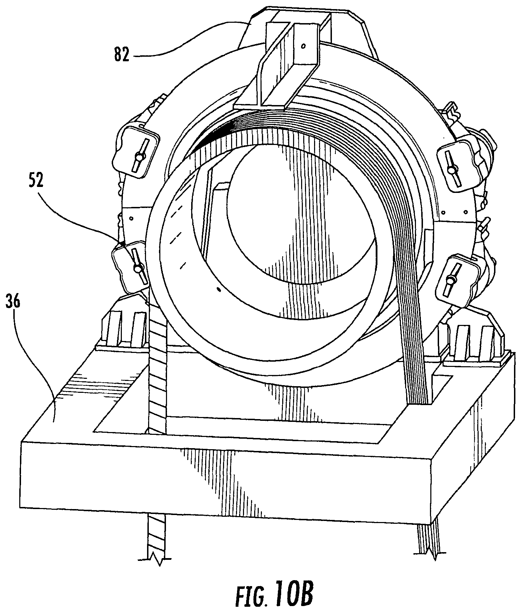

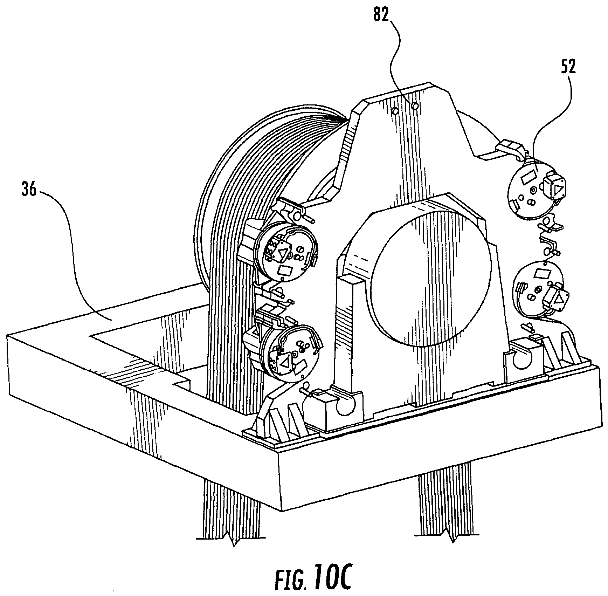

Turning to FIGS. 10A-10C, another embodiment is illustrated for mounting calipers 52 to a frame 36, with a caliper unitary mounting structure 82, illustrated with four calipers 52. In this embodiment, again with the absence, or removal, of a brake magnet housing 84, an additional frame mounted central support 84A is provided. The support 84A is connected to a rearward extending bracket 82A attached to a joining apex 82B of the caliper mounting structure 82. The mounting structure 82 may therefore be slender, similar to arms 82 illustrated above in FIGS. 9A-9F. In this embodiment, the mounting structure 82 need not be removed to change brake pads.

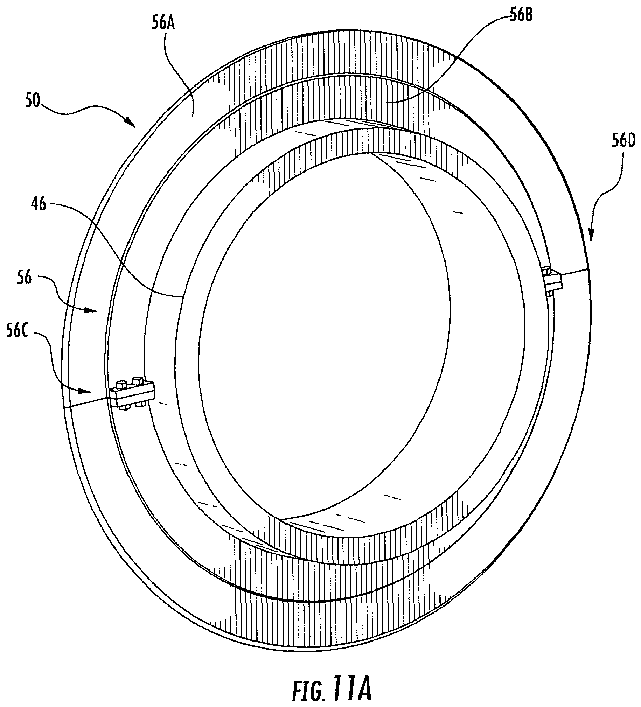

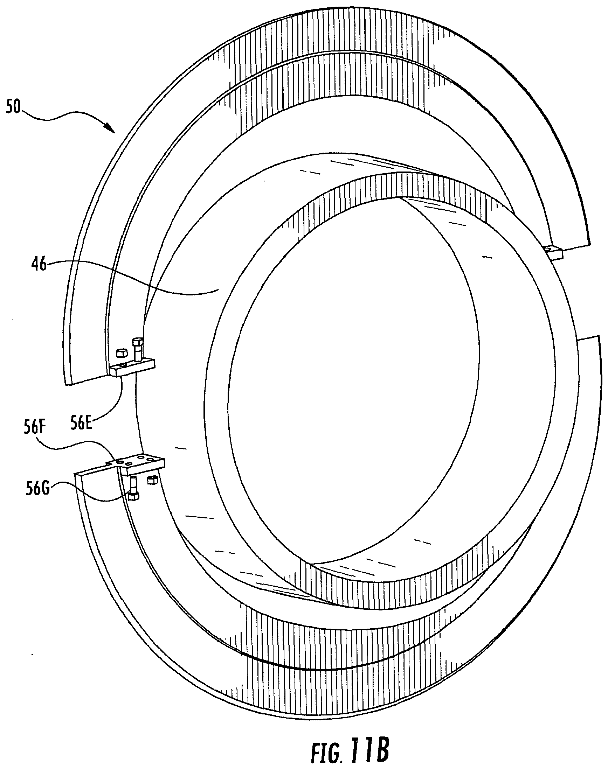

Turning to FIGS. 11A-11B, an alternative flanged disc segment 50 is illustrated. Each flanged disc segment 50 in this embodiment is a disc without a band 54. The resulting flanges 56 have radially outer and inner portions 56A, 56B. The outer portion 56A forms the braking rotor. The inner portion 56B is axially thicker than the outer portion 56A, providing structural stability. In addition, circumferentially opposing ends 56C, 56D of the flanges 56 include axially extending flange connectors 56E, with through holes 56F, for connecting with circumferentially adjacent flanges 56 via bolts 56G.

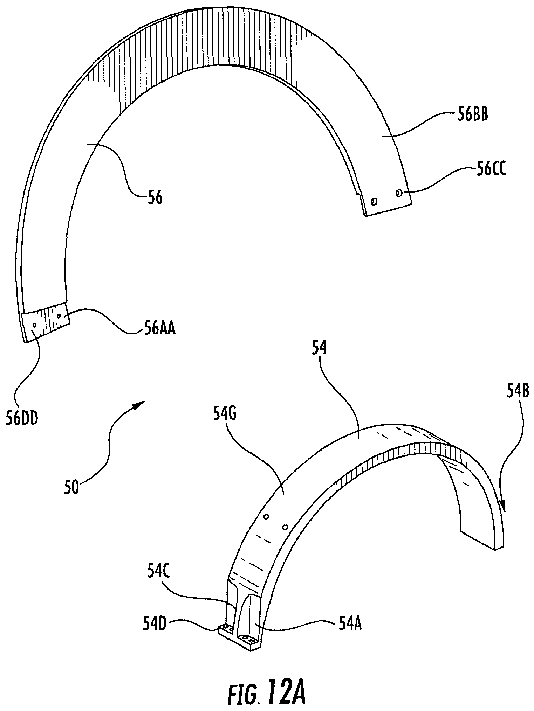

Turning to FIGS. 12A-12D, another embodiment is illustrated for connecting each flanged disc segment 50 to the drum 46. Each flanged disc segment 50 in this embodiment is a two piece structure, including a band 54 for connecting a flange 56 to a drum 46. The flange 56 forms the braking rotor. The flange 56 and band 54 are welded together prior to being installed against the drum 46.

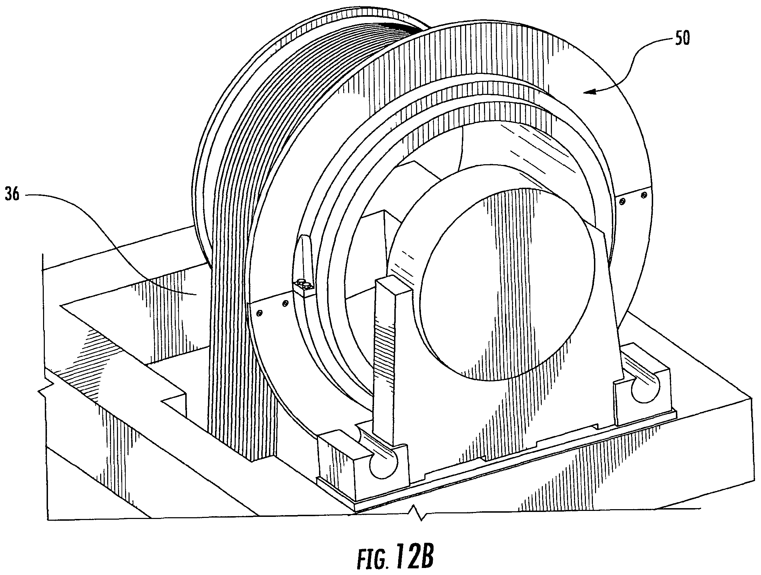

Circumferentially opposing ends 56AA, 56BB of the flange 56 are half-lapped in the circumferential direction, to connect with circumferentially adjacent flanges 56 as illustrated in FIGS. 12B - 12D. One of the ends 56AA, 56BB is provided with a pair of tapered through holes 56CC, and the other of the ends includes threaded holes 56DD to flush mount a screw 56EE (FIG. 12D).

One of the circumferentially opposing ends 54A of the band 54 is provided with a pair of circumferentially extending countersunk impressions 54C and through-holes 54D (FIG. 12A). The other end 54B is provided with circumferentially extending threaded holes 54E (FIG. 12D). With this configuration, bolts 54F are used to connect circumferentially aligned flanged disc segments 50, as illustrated in FIGS. 12B-12D.

The band 54 is provided with four pairs of radially extending through-holes 54G (FIG. 12A). The drum 46 is machined to include matching holes 46A (FIG. 13D) and eight spring pins 54H (FIG. 12D) are applied to secure the band 54 to the drum 46.

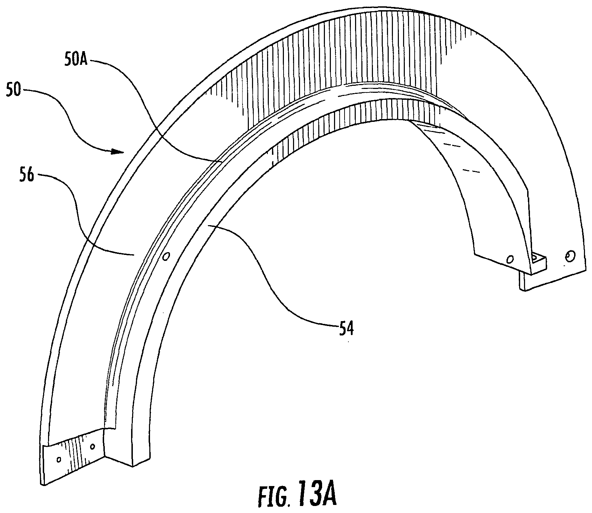

Turning to FIGS. 13A-13D, another embodiment is illustrated for connecting flanged disc segments 50 to the drum 46. Each flanged disc segment 50 in this embodiment is a unitary structure, including a band 54 for connecting a flange 56 to a drum 46, the flange 56 forming the braking rotor. The flange 56 and band 54 are cast formed, with a radial corner joint 50A. Dimensionally, the embodiment 13A-13D is essentially the same as the structure illustrated in FIGS. 12A-12D, connecting to the drum 46 in similar fashion.

Those skilled in the art who have the benefit of this description will realize that a variety of brake configurations and a variety of machine configurations could be used that are different than the illustrated example. The techniques associated with the example retrofitting procedure may be used in a variety of elevator system configurations to retrofit a previously installed elevator machine with a supplementary brake.

The preceding description is exemplary rather than limiting in nature. Variations and modifications to the disclosed examples may become apparent to those skilled in the art that do not necessarily depart from the essence of this invention. The scope of legal protection given to this invention can only be determined by studying the following claims.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

## Claims

1. A method of retrofitting an elevator machine (30) with primary and secondary braking, the machine (30) being disposed on a machine support frame (36) in an elevator machine room (38), and engaging one or more ropes (26) for providing selective movement of an elevator car (22) disposed in an elevator shaft, the machine (30) having a drive sheave (44) including a cylindrical brake drum (46), and brake components including dual brake arms (32);
the method comprising:
removing the brake components;
affixing flanged disc segments (50) about the drum (46) and interlocking the flanged disc segments (50) to form a brake rotor; and
mounting respective brake calipers (52) to frame mounts (40) for providing primary and secondary braking to the elevator machine (30);
**characterized in that** each flanged disc segment (50) includes a flange (56) which forms a brake disk of the brake rotor, and a band (54) positioned against the brake drum for connecting the flange (56) to the brake drum.

2. The method of claim 1, wherein the flange (56) extends in radial direction and the band (54) extends in axial direction.

3. The method ofclaim 1 or 2, wherein each flanged disc segment (56) includes disc guide holes (80), the drum (46) includes matching brake drum guide holes, and affixing the flanged disc segments (56) to the drum (46) includes positioning guide members therethrough, for orienting each flanged disc segment (56) against the drum (46);
wherein particularly the guide members are bolts or dowels.

4. The method of claim 3, wherein the disc guide holes (80) are band guide holes formed in the band (54) of the flanged disc segment (56).

5. The method of any of claims 1 to 4, wherein each flanged disc segment (56) is formed from any of:
(i) a rolled angle; (ii) affixing together an annular band segment and an annular flange segment and providing therebetween a keyed connection;
wherein particularly the annular band segments and annular flange segments are welded and/or bolted together;
(iii) a two piece structure including a band (54) and a flange (56) welded together prior to being installed against the drum (46), and
(iv) a unitary structure including a band (54) and a flange (56) that a cast formed with a radial corner joint (50A).

6. The method of any of claims 1 to 5, wherein affixing each flanged disc segment (50) to the drum (46) includes any of:
(i) connecting, to circumferentially adjacent ends of each flange (56), fastening members (60), and thereafter fastening together the fastening members (60);
wherein particularly the fastening members (60) are circumferentially adjacent tubes (62), secured together via a bolt (64), at least one washer (66) and a nut (68); and
(ii) wrapping a continuous rod (70) around an outer diameter of the drum (46), clamping together rod ends (72), and providing hoop compression with a parallel rod clamp (74);
wherein particularly the rod ends (72) are threaded and the clamp (74) includes tubes (76) and tightening nuts (78).

7. The method of any claims 1 to 6, wherein mounting calipers (52) includes mounting caliper mounting arms (82) to the respective frame mounts (40), and mounting the calipers (52) to the respective mounting arms (82);
wherein particularly the mounting arms (82) each include a same number of calipers (52), circumferentially spaced about each arm by a mutually constant angle; wherein particularly the machine (30) includes a brake magnet housing (84) with a spring guide rod (88), supported by a brake magnet mount (85), and mounting calipers (52) includes mounting an end of the mounting arms (82) to respective opposing ends of the brake magnet housing (84) or spring guide rod (88).

8. An elevator machine (30), retrofitted with primary and secondary braking, the machine (30) being disposed on a machine support frame (36) in an elevator machine room (30), and engaging one or more ropes (26) for providing selective movement of an elevator car (22) disposed in an elevator shaft (24), the machine (30) having a drive sheave (44) including a cylindrical brake drum (46), and brake components including dual brake arms (32);
the machine (30) comprising:
flanged disc segments (50), affixed about the drum (46) and interlocked to form a brake rotor; and
mounted, to frame mounts (40), respective brake calipers (52), for providing primary and secondary braking to the elevator machine (30);
**characterized in that** each flanged disc segment (50) includes a flange (56) which forms a brake disk of the brake rotor, and a band (54) positioned against the brake drum for connecting the flange (56) to the brake drum.

9. The elevator machine (30) of claim 8,
wherein the flange (56) extends in radial direction and the band (54) extends in axial direction.

10. The elevator machine (30) of claim 8 or 9, wherein each flanged disc segment (50) includes disc guide holes (80), the drum includes matching drum guide holes, and guide members are positioned therethrough, for orienting each flanged disc segment (50) against the drum (46).

11. The elevator machine (30) of claim 10, wherein the disc guide holes (80) are band guide holes formed in the band (54) of the flanged disc segment (56).

12. The elevator machine (30) of any of claims8 to 11, wherein each flanged disc segment (50) is formed by any of:
(i) a rolled angle;
(ii) affixing together an annular band segment and an annular flange segment and providing therebetween a keyed connection;
(iii) a two piece structure including a band (54) and a flange (56) welded together prior to being installed against the drum (46), and
(iv) a unitary structure including a band (54) and a flange (56) that a cast formed with a radial corner joint (50A).

13. The elevator machine (30) of any of claims 8 to 12, wherein each flanged disc segment (50) is affixed to the drum (46) by any of connecting, to circumferentially adjacent ends of each flange (56), fastening members (60), and thereafter fastening together the fastening members (60); andwrapping a continuous rod (70) around an outer diameter of the drum (46), clamping the rod ends (72), and providing hoop compression with a parallel rod clamp (74).

14. The elevator machine (30) of any of claims 8 to 13, including caliper mounting arms (82), mounted to the respective frame mounts (40), and the calipers(52) are mounted to the respective mounting arms (82): and/or wherein the elevator machine (30) includes a brake magnet housing (84), with a spring guide rod (88), supported by a brake magnet mount (85), and an end of the mounting arms (82) is mounted to respective opposing ends of the brake magnet housing (84) or spring guide rod (88).

## Patentansprüche

1. Verfahren zum Nachrüsten einer Aufzugsmaschine (30) mit einer Primär- und einer Sekundärbremse, wobei die Maschine (30) auf einem Maschinenträgerrahmen (36) in einem Aufzugsmaschinenraum (38) angeordnet ist und mit einem oder mehreren Seilen (26) in Eingriff steht, um eine selektive Bewegung einer Aufzugskabine (22) bereitzustellen, die in einem Aufzugsschacht angeordnet ist, wobei die Maschine (30) eine Antriebsscheibe (44), die eine zylindrische Bremstrommel (46) beinhaltet, sowie Bremskomponenten, die doppelte Bremsarme (32) beinhalten, aufweist;
wobei das Verfahren umfasst:
Entfernen der Bremskomponenten;
Anbringen von geflanschten Scheibensegmenten (50) um die Trommel (46) herum und Ineinandergreifen der geflanschten Scheibensegmente (50), um einen Bremsrotor zu bilden; und
Montieren jeweiliger Bremssättel (52) an Rahmenhalterungen (40) zum Bereitstellen einer Primär- und einer Sekundärbremsung für die Aufzugsmaschine (30);
**dadurch gekennzeichnet, dass** jedes geflanschte Scheibensegment (50) einen Flansch (56), der eine Bremsscheibe des Bremsrotors bildet, und ein Band (54), das an der Bremstrommel positioniert ist, um den Flansch (56) mit der Bremstrommel zu verbinden, beinhaltet.

2. Verfahren nach Anspruch 1, wobei sich der Flansch (56) in radialer Richtung erstreckt und sich das Band (54) in axialer Richtung erstreckt.

3. Verfahren nach Anspruch 1 oder 2, wobei jedes geflanschte Scheibensegment (56) Scheibenführungslöcher (80) beinhaltet, die Trommel (46) passende Bremstrommel-Führungslöcher beinhaltet und ein Anbringen der geflanschten Scheibensegmente (56) an der Trommel (46) ein Positionieren von Führungselementen durch diese hindurch beinhaltet, um jedes geflanschte Scheibensegment (56) an der Trommel (46) auszurichten;
wobei die Führungselemente insbesondere Bolzen oder Dübel sind.

4. Verfahren nach Anspruch 3, wobei die Scheibenführungslöcher (80) Bandführungslöcher sind, die in dem Band (54) des geflanschten Scheibensegments (56) gebildet sind.

5. Verfahren nach einem der Ansprüche 1 bis 4, wobei jedes geflanschte Scheibensegment (56) gebildet ist aus einem von:
(i) einem Winkelstahl; (ii) Anbringen eines ringförmigen Bandsegments und eines ringförmigen Flanschsegments aneinander und Bereitstellen einer Passverbindung zwischen diesen;
wobei insbesondere die ringförmigen Bandsegmente und die ringförmigen Flanschsegmente miteinander verschweißt und/oder verschraubt werden;
(iii) einer zweiteiligen Konstruktion, die ein Band (54) und einen Flansch (56) beinhaltet, die miteinander verschweißt werden, bevor sie an der Trommel (46) installiert werden, und
(iv) einer einteiligen Konstruktion, die ein Band (54) und einen Flansch (56) beinhaltet, die mit einer radialen Eckverbindung (50A) gegossen wurden.

6. Verfahren nach einem der Ansprüche 1 bis 5, wobei das Anbringen jedes geflanschten Scheibensegments (50) an der Trommel (46) eines von Folgendem beinhaltet:
(i) Verbinden von Befestigungselementen (60) mit umlaufend benachbarten Enden jedes Flansches (56) und anschließend Befestigen der Befestigungselemente (60) aneinander;
wobei die Befestigungselemente (60) insbesondere umlaufend benachbarte Rohre (62) sind, die über einen Bolzen (64), mindestens eine Unterlegscheibe (66) und eine Mutter (68) aneinander gesichert sind; und
(ii) Umwickeln einer durchgehenden Stange (70) um einen Außendurchmesser der Trommel (46), Zusammenklemmen von Stangenenden (72) und Bereitstellen einer Ringkompression mit einer Parallelstangenklemme (74);
wobei insbesondere die Stangenenden (72) mit einem Gewinde versehen sind und die Klemme (74) Rohre (76) und Feststellmuttern (78) beinhaltet.

7. Verfahren nach einem der Ansprüche 1 bis 6, wobei das Montieren von Bremssätteln (52) ein Montieren von Bremssattel-Montagearmen (82) an den jeweiligen Rahmenhalterungen (40) und ein Montieren der Bremssättel (52) an den jeweiligen Montagearmen (82) beinhaltet;
wobei insbesondere die Montagearme (82) jeweils die gleiche Anzahl von Bremssätteln (52) beinhalten, die umlaufend in einem gegenseitig konstanten Winkel um jeden Arm herum beabstandet sind;
wobei die Maschine (30) insbesondere ein Bremsmagnetgehäuse (84) mit einer Federführungsstange (88) beinhaltet, das von einer Bremsmagnethalterung (85) getragen wird, und das Montieren von Bremssätteln (52) ein Montieren eines Endes der Montagearme (82) an jeweiligen gegenüberliegenden Enden des Bremsmagnetgehäuses (84) bzw. der Federführungsstange (88) beinhaltet.

8. Aufzugsmaschine (30), die mit einer Primär- und einer Sekundärbremse nachgerüstet ist, wobei die Maschine (30) auf einem Maschinenträgerrahmen (36) in einem Aufzugsmaschinenraum (30) angeordnet ist und mit einem oder mehreren Seilen (26) in Eingriff steht, um eine selektive Bewegung einer Aufzugskabine (22) bereitzustellen, die in einem Aufzugsschacht (24) angeordnet ist, wobei die Maschine (30) eine Antriebsscheibe (44), die eine zylindrische Bremstrommel (46) beinhaltet, sowie Bremskomponenten, die doppelte Bremsarme (32) beinhalten, aufweist;
wobei die Maschine (30) umfasst:
geflanschte Scheibensegmente (50), die um die Trommel (46) herum angebracht sind und ineinandergreifen, um einen Bremsrotor zu bilden; und
an Rahmenhalterungen (40) montierte, jeweilige Bremssättel (52) zum Bereitstellen einer Primär- und einer Sekundärbremsung für die Aufzugsmaschine (30);
**dadurch gekennzeichnet, dass** jedes geflanschte Scheibensegment (50) einen Flansch (56), der eine Bremsscheibe des Bremsrotors bildet, und ein Band (54), das an der Bremstrommel positioniert ist, um den Flansch (56) mit der Bremstrommel zu verbinden, beinhaltet.

9. Aufzugsmaschine (30) nach Anspruch 8,
wobei sich der Flansch (56) in radialer Richtung erstreckt und sich das Band (54) in axialer Richtung erstreckt.

10. Aufzugsmaschine (30) nach Anspruch 8 oder 9, wobei jedes geflanschte Scheibensegment (50) Scheibenführungslöcher (80) beinhaltet, die Trommel passende Trommelführungslöcher beinhaltet und Führungselemente durch diese hindurch positioniert sind, um jedes geflanschte Scheibensegment (50) an der Trommel (46) auszurichten.

11. Aufzugsmaschine (30) nach Anspruch 10, wobei die Scheibenführungslöcher (80) Bandführungslöcher sind, die in dem Band (54) des geflanschten Scheibensegments (56) gebildet sind.

12. Aufzugsmaschine (30) nach einem der Ansprüche 8 bis 11, wobei jedes geflanschte Scheibensegment (50) gebildet ist durch eines von:
(i) einem Winkelstahl;
(ii) Anbringen eines ringförmigen Bandsegments und eines ringförmigen Flanschsegments aneinander und Bereitstellen einer Passverbindung zwischen diesen;
(iii) einer zweiteiligen Konstruktion, die ein Band (54) und einen Flansch (56) beinhaltet, die miteinander verschweißt werden, bevor sie an der Trommel (46) installiert werden, und
(iv) einer einteiligen Konstruktion, die ein Band (54) und einen Flansch (56) beinhaltet, die mit einer radialen Eckverbindung (50A) gegossen wurden.

13. Aufzugsmaschine (30) nach einem der Ansprüche 8 bis 12, wobei jedes geflanschte Scheibensegment (50) an der Trommel (46) angebracht ist durch eines von einem Verbinden von Befestigungselementen (60) mit umlaufend benachbarten Enden jedes Flansches (56) und einem anschließenden Befestigen der Befestigungselemente (60) aneinander; und Umwickeln einer durchgehenden Stange (70) um einen Außendurchmesser der Trommel (46), Klemmen der Stangenenden (72) und Bereitstellen einer Ringkompression mit einer Parallelstangenklemme (74).

14. Aufzugsmaschine (30) nach einem der Ansprüche 8 bis 13, beinhaltend Bremssattel-Montagearme (82), die an den jeweiligen Rahmenhalterungen (40) montiert sind, und wobei die Bremssättel (52) an den jeweiligen Befestigungsarmen (82) montiert sind; und/oder wobei die Aufzugsmaschine (30) ein Bremsmagnetgehäuse (84) mit einer Federführungsstange (88) beinhaltet, das von einer Bremsmagnethalterung (85) getragen ist, und ein Ende der Montagearme (82) an jeweiligen gegenüberliegenden Enden des Bremsmagnetgehäuses (84) oder der Federführungsstange (88) montiert ist.

## Revendications

1. Procédé de post-équipement d'une machine d'ascenseur (30) avec un freinage primaire et secondaire, la machine (30) étant disposée sur un cadre de support de machine (36) dans une salle de machine d'ascenseur (38), et entrant en contact avec un ou plusieurs câbles (26) pour fournir un mouvement sélectif d'une cabine d'ascenseur (22) disposée dans une cage d'ascenseur, la machine (30) présentant une poulie d'entraînement (44) comportant un tambour de frein cylindrique (46), et des composants de frein comportant deux bras de frein (32) ;
le procédé comprenant :
le démontage des composants de frein ;
la fixation de segments de disque à bride (50) autour du tambour (46) et l'imbrication des segments de disque à bride (50) pour former un rotor de frein ; et
le montage d'étriers (52) de frein respectifs sur des supports de cadre (40) pour fournir le freinage primaire et secondaire à la machine d'ascenseur (30) ;
**caractérisé en ce que** chaque segment de disque à bride (50) comporte une bride (56) qui forme un disque de frein du rotor de frein, et une bande (54) positionnée contre le tambour de frein pour relier la bride (56) au tambour de frein.

2. Procédé selon la revendication 1, dans lequel la bride (56) s'étend dans une direction radiale et la bande (54) s'étend dans une direction axiale.

3. Procédé selon la revendication 1 ou la revendication 2, dans lequel chaque segment de disque à bride (56) comporte des trous de guidage de disque (80), le tambour (46) comporte des trous de guidage de tambour de frein correspondants, et la fixation des segments de disque à bride (56) au tambour (46) comporte des éléments de guidage de positionnement à travers celui-ci, pour orienter chaque segment de disque à bride (56) contre le tambour (46) ;
dans lequel en particulier les éléments de guidage sont des boulons ou des goujons.

4. Procédé selon la revendication 3, dans lequel les trous de guidage de disque (80) sont des trous de guidage de bande formés dans la bande (54) du segment de disque à bride (56).

5. Procédé selon l'une quelconque des revendications 1 à 4, dans lequel chaque segment de disque à bride (56) est formé à partir de l'un ou de l'une quelconque :
(i) d'un angle roulé ; (ii) de la fixation d'un segment de bande annulaire et d'un segment de bride annulaire et la fourniture entre eux d'une liaison clavetée ;
dans lequel en particulier les segments de bande annulaire et les segments de bride annulaire sont soudés et/ou boulonnés ensemble ;
(iii) d'une structure en deux parties comportant une bande (54) et une bride (56) soudées ensemble avant d'être installées contre le tambour (46), et
(iv) d'une structure unitaire comportant une bande (54) et une bride (56) formée par moulage avec un joint d'angle radial (50A).

6. Procédé selon l'une quelconque des revendications 1 à 5, dans lequel la fixation de chaque segment de disque à bride (50) au tambour (46) comporte l'une des opérations suivantes :
(i) la liaison, à des extrémités circonférentiellement adjacentes de chaque bride (56), d'éléments d'attache (60), puis l'attache ensemble des éléments d'attache (60) ;
dans lequel en particulier les éléments d'attache (60) sont des tubes (62) circonférentiellement adjacents, maintenus ensemble par l'intermédiaire d'un boulon (64), au moins d'une rondelle (66) et d'un écrou (68) ; et
(ii) l'enroulement d'une tige (70) continue autour d'un diamètre extérieur du tambour (46), le serrage ensemble d'extrémités de tige (72) et la fourniture d'une compression circonférentielle avec un dispositif de serrage de tige parallèle (74) ;
dans lequel en particulier les extrémités de tige (72) sont filetées et le dispositif de serrage (74) comporte des tubes (76) et des écrous de serrage (78).

7. Procédé selon l'une quelconque des revendications 1 à 6, dans lequel le montage des étriers (52) comporte le montage de bras de montage (82) d'étrier sur les supports de cadre (40) respectifs, et le montage des étriers (52) sur les bras de montage (82) respectifs ;
dans lequel en particulier les bras de montage (82) comportent chacun un même nombre d'étriers (52), espacés circonférentiellement autour de chaque bras d'un angle mutuellement constant ;
dans lequel en particulier la machine (30) comporte un boîtier d'aimant de frein (84) avec une tige de guidage de ressort (88), supporté par un support d'aimant de frein (85), et le montage des étriers (52) comporte le montage d'une extrémité des bras de montage (82) au niveau d'extrémités opposées respectives du boîtier d'aimant de frein (84) ou de la tige de guidage de ressort (88).

8. Machine d'ascenseur (30), post-équipée avec un freinage primaire et secondaire, la machine (30) étant disposée sur un cadre de support de machine (36) dans une salle de machine d'ascenseur (30), et entrant en contact avec un ou plusieurs câbles (26) pour fournir un mouvement sélectif d'une cabine d'ascenseur (22) disposée dans une cage d'ascenseur (24), la machine (30) présentant une poulie d'entraînement (44) comportant un tambour de frein cylindrique (46), et des composants de frein comportant deux bras de frein (32) ;
la machine (30) comprenant :
des segments de disque à bride (50), fixés autour du tambour (46) et imbriqués pour former un rotor de frein ; et
le montage, sur des supports de cadre (40), d'étriers (52) de frein respectifs pour fournir un freinage primaire et secondaire à la machine d'ascenseur (30) ;
**caractérisée en ce que** chaque segment de disque à bride (50) comporte une bride (56) qui forme un disque de frein du rotor de frein, et une bande (54) positionnée contre le tambour de frein pour relier la bride (56) au tambour de frein.

9. Machine d'ascenseur (30) selon la revendication 8,
dans laquelle la bride (56) s'étend dans une direction radiale et la bande (54) s'étend dans une direction axiale.

10. Machine d'ascenseur (30) selon la revendication 8 ou la revendication 9, dans laquelle chaque segment de disque à bride (50) comporte des trous de guidage de disque (80), le tambour comporte des trous de guidage de tambour correspondants, et des éléments de guidage sont positionnés à travers celui-ci, pour orienter chaque segment de disque à bride (50) contre le tambour (46).

11. Machine d'ascenseur (30) selon la revendication 10, dans laquelle les trous de guidage de disque (80) sont des trous de guidage de bande formés dans la bande (54) du segment de disque à bride (56).

12. Machine d'ascenseur (30) selon l'une quelconque des revendications 8 à 11, dans laquelle chaque segment de disque à bride (50) est formé par l'un ou l'une quelconque :
(i) d'un angle roulé ;
(ii) de la fixation d'un segment de bande annulaire et d'un segment de bride annulaire et la fourniture entre eux d'une liaison clavetée ;
(iii) d'une structure en deux parties comportant une bande (54) et une bride (56) soudées ensemble avant d'être installées contre le tambour (46), et
(iv) d'une structure unitaire comportant une bande (54) et une bride (56) formée par moulage avec un joint d'angle radial (50A).

13. Machine d'ascenseur (30) selon l'une quelconque des revendications 8 à 12, dans laquelle chaque segment de disque à bride (50) est fixé au tambour (46) par l'une ou l'un quelconque d'une liaison, aux extrémités circonférentiellement adjacentes de chaque bride (56), d'éléments d'attache (60), puis de l'attache ensemble des éléments d'attache (60) ; et d'un enroulement d'une tige (70) continue autour d'un diamètre extérieur du tambour (46), du serrage des extrémités de tige (72) et de la fourniture d'une compression circonférentielle avec un dispositif de serrage de tige parallèle (74).

14. Machine d'ascenseur (30) selon l'une quelconque des revendications 8 à 13, comportant des bras de montage d'étrier (82), montés sur les supports de cadre (40) respectifs, et les étriers (52) sont montés sur les bras de montage (82) respectifs : et/ou dans laquelle la machine d'ascenseur (30) comporte un boîtier d'aimant de frein (84), avec une tige de guidage de ressort (88), supporté par un support d'aimant de frein (85), et une extrémité des bras de montage (82) est montée sur des extrémités opposées respectives du boîtier d'aimant de frein (84) ou de la tige de guidage de ressort (88).
